# EUROPÄISCHE PATENTSCHRIFT

(11) **EP 0 590 515 B1**
(45) Veröffentlichungstag und Bekanntmachung des Hinweises auf die Patenterteilung: **27.12.1995**
(21) Anmeldenummer: 93115331.6
(22) Anmeldetag: 23.09.1993
(51) Int. Cl.: B60T 15/14, B60T 13/66, B60T 17/22

(54) **Betriebsbremsventil für eine elektrisch oder pneumatisch betätigbare Bremsanlage eines Kraftfahrzeugs**
Brake control valve for electrically or pneumatically operated brake system for vehicles
Valve de commande pour système de freinage pneumatique ou électrique d'un véhicule

(30) Priorität: 28.09.1992 DE 4232492
(43) Veröffentlichungstag der Anmeldung: 06.04.1994
(73) Patentinhaber: GRAU GMBH, D-69123 Heidelberg (DE)
(72) Erfinder: Sulzyc, Jerzy, D-69214 Eppelheim (DE)
(74) Vertreter: Rehberg, Elmar, Dipl.-Ing.

(56) Entgegenhaltungen:
- EP-B- 0 267 881
- DE-A- 3 308 279
- DE-A- 3 841 749

## Beschreibung

Die Erfindung bezieht sich auf ein Betriebsbremsventil für eine elektrisch oder pneumatisch betätigbare Bremsanlage eines Kraftfahrzeugs, mit einem in einem Gehäuse angeordneten, verschiebbaren Druckstück und einem über eine Stufungsfeder betätigbaren Wiegekolben, von dessen Wiegekammer eine Steuerleitung ausgeht und dem ein mit einer Vorratskammer ausgestattetes und über eine Verbindungsleitung an einen Druckluftvorrat anschließbares, kombiniertes Einlaß/Auslaß-Ventil nachgeschaltet ist, und mit einem Wegsensor, der über einen mit dem Druckstück verbundenen Stößel betätigbar ist. Ein solches Betriebsbremsventil dient dazu, zum Zweck der Einleitung und Durchführung einer Bremsung des Kraftfahrzeugs einen vom Fahrer abzugebenden Steuerimpuls letztlich in eine Druckluftbetätigung der Bremszylinder der Bremsanlage umzuformen bzw. nach dorthin weiterzuleiten. Die vorliegende Erfindung ist unabhängig davon anwendbar, ob das Betriebsbremsventil ein- oder mehrkreisig ausgebildet ist.

Ein Betriebsbremsventil der eingangs beschriebenen Art ist aus der DE-A-38 41 749 bekannt. Der Wegsensor ist dabei in dem Doppelventilkörper des kombinierten Einlaß/Auslaß-Ventils und damit in dem zur Atmosphäre führenden Auslaßkanal untergebracht. Das Betriebsbremsventil wird im Rahmen einer Mehrkreis-Bremsanlage mit druckmittelbetätigten Bremsen eingesetzt, bei der der der Vorderachse des Kraftfahrzeugs zugeordnete Bremskreis über den pneumatischen Teil des Betriebsbremsventils angesteuert wird. Von dem Wegsensor, der den Weg des Druckstücks im Gehäuse des Betriebsbremsventils wiedergibt, wird ein elektrisches Signal gewonnen, das einer elektronischen Steuereinrichtung zugeführt wird. Hiervon wird als Folgesteuerung ein zweiter Bremskreis abgenommen, der der Hinterachse des Kraftfahrzeugs zugeordnet ist. Dieser zweite Bremskreis wird elektrisch betätigt, und zwar in Abhängigkeit von dem pneumatisch betätigbaren ersten Kreis. Die Steuereinrichtung ermöglicht es, auch andere Parameter auf den Bremsdruck im zweiten Kreis modulierend zur Einwirkung zu bringen.

Aus der EP-0 267 881 B1 ist ein Betriebsbremsventil bekannt, bei welchem dem Druckstück ein lineares Potentiometer als Wegsensor für eine retarde Ansteuerung zugeordnet ist. Aus der DE-PS 26 19 775 ist ein Betriebsbremsventil bekannt, bei dem die elektrische Ansteuerung eines Retarders über einen Stufenschalter erfolgt, der in dem Weg des Druckstücks eingeschaltet ist.

Aus der DE-OS 33 44 252 ist eine mehrkreisige Bremsanlage für schwere Straßenfahrzeuge bekannt, in der ein Betriebsbremsventil Verwendung findet, welches in einem Teil pneumatisch und in einem weiteren Teil elektrisch ausgebildet ist. Über den pneumatischen Teil erfolgt eine pneumatische Ansteuerung der Bremszylinder der Vorderachse. Im elektrischen Teil ist ein Sensor untergebracht, der ein Stromsignal an eine elektronische Steuereinheit abgibt, die in erster Linie den der Hinterachse zugeordneten Bremskreis elektrisch aussteuert. Die elektronische Steuereinheit steuert jedoch auch Magnetventile elektrisch an, die dem Vorderachsbremskreis Zugeordnet sind. Über Zweiwegeventile wird der jeweils höhere Eingangsdruck als Bremsdruck an die Bremszylinder abgegeben.

Der Erfindung liegt die Aufgabe zugrunde, ein Betriebsbremsventil bereitzustellen, dessen wesentliche Teile bei Antritt der Fahrt in einfacher Weise auf Funktionstüchtigkeit überprüfbar sind und das bei intakten Teilen eine elektrische Betätigung der Bremsanlage sowie im Notfall eine pneumatische Betätigung gestattet.

Erfindungsgemäß wird dies bei einem Betriebsbremsventil der eingangs beschriebenen Art dadurch erreicht, daß in der Verbindungsleitung zu der Vorratskammer oder in der von der Wiegekammer ausgehenden Steuerleitung des Einlaß/Auslaß-Ventils ein Absperrventil angeordnet ist, zu dessen Betätigung ein elektrisch ansteuerbares Magnetventil vorgesehen ist, das in nicht-erregtem Zustand den Ventilkörper des Absperrventils entgegen seiner Schließrichtung entlastet.

Mit der erfindungsgemäßen Ausbildung des Betriebsbremsventils werden zugleich zwei wesentliche Funktionen erreicht. Zum einen wird es möglich, bei Antritt einer Fahrt die wesentlichen Teile des Betriebsbremsventils auf ihre Funktionstüchtigkeit zu überprüfen und andererseits ermöglichen es dieselben Teile im Notfall, also bei einem Defekt in den elektrischen Teilen des Betriebsbremsventils oder der elektronischen Steuereinrichtung einer nachgeschalteten Anlage, anstelle des ausgesteuerten elektrischen Signals des Betriebsbremsventils ein pneumatisches Signal zum Ansteuern der Betriebsbremse zu nutzen. Damit ergibt sich die Möglichkeit, nach dem Schließen der Zündung den Motor eines Kraftfahrzeugs in Tätigkeit zu setzen und über die übliche Druckluftbeschaffungsanlage die Vorratsbehälter aufzufüllen. Über einen Druckschalter oder Drucksensor kann dem Fahrer angezeigt werden, wann der vorgesehene Vorratsdruck erreicht ist. Der Fahrer kann dann eine probeweise Betätigung des Betriebsbremsventils in der gewohnten Weise mit dem Fuß durchführen und andererseits mit einem Druckschalter, Manometer o. dgl. feststellen, ob und welcher Steuerdruck ausgesteuert wird und ob und welches Signal der Wegsensor entsprechend dem zurückgelegten Weg abgibt. Während dieser Betätigung des Betriebsbremsventils ist das Magnetventil noch nicht betätigt, d. h. es befindet sich in nicht-erregtem Zustand. Wird dann zusätzlich das Magnetventil erregt, was beispielsweise durch einen weiteren, vom Fahrer zu betätigenden Schalter oder über eine elektronische Steuereinrichtung der Bremsanlage erfolgen kann, so wird das Absperrventil geschlossen, so daß weitere Druckluft nicht in die Vorratskammer einströmen kann. Eine Fortsetzung des Bremsvorgangs wird sich dann in einem ansteigenden Signal des Wegsensors und einem konstantbleibenden Signal des Drucks in der ausgesteuerten Leitung bemerkbar machen. Damit sind die wesentlichen Teile des Betriebsbremsventils auf ihre Funktionstüchtigkeit überprüft und das Magnetventil bleibt auch nach der Überprüfung erregt, so daß das Absperrventil seine Schließstellung nicht verläßt. Während der sich dann anschließenden Fahrt wird allein das über den Wegsensor abgegebene elektrische Signal für die Ansteuerung der Betriebsbremse genutzt, während die pneumatische Aussteuerung unterdrückt wird. Wenn jedoch ein Defekt im elektrischen Bereich eintritt, wird auch das Magnetventil stromlos bzw. stromlos geschaltet, so daß dann das pneumatische Steuersignal des Betriebsbremsventils für weitere Bremsungen zur Verfügung steht.

Um eine automatische Überprüfung der wesentlichen Teile des Betriebsbremsventils bei Antritt einer Fahrt zu ermöglichen, ist ein weiteres, elektrisch ansteuerbares Magnetventil vorgesehen und der Wiegekolben weist ansteuerseitig eine Wirkfläche und der Wegsensor in Betätigungsrichtung durch den Stößel eine Kolben/Zylinder-Einheit auf, die beide über das weitere Magnetventil beaufschlagbar sind. Damit ergibt sich die Möglichkeit, die beiden Magnetventile von einer nachgeschalteten Steuerelektronik zu schalten und dabei einen Prüfschaltzyklus ablaufen zu lassen, der ohne den Eingriff des Fahrers abläuft. Erweist sich die Funktionstüchtigkeit der wesentlichen Teile des Betriebsbremsventils, dann endet der Prüfzyklus auch so, daß das erste Magnetventil weiterhin erregt bleibt und damit das Absperrventil in seiner Schließstellung fixiert wird, während im Notfall, also bei Ausfall der Elektrik, die elektrischen Signale unterdrückt und das pneumatische Ausgangssignal für die Steuerung der Betriebsbremse genutzt wird.

Das Magnetventil oder die Magnetventile weisen einen Vorratsanschluß und einen Entlüftungsanschluß auf. Die Magnetventile sind also mit einem Vorratsanschluß versehen und ermöglichen es so, die jeweils gewünschten Wirkflächen oder Teilwirkflächen anzusteuern, um eine bestimmte Prüfbewegung oder eine Schaltbewegung herbeizuführen. Andererseits dienen die Magnetventile in der nicht-erregten Stellung dazu, die Wirkflächen oder Teilwirkflächen zu entlüften.

Das Absperrventil kann als Ventilkörper einen Stufenkolben aufweisen, der mit einem eingezogenen Rand zusammenwirkt und mit seiner Schließrichtung in Durchflußrichtung der Druckluft eingebaut ist. Dies kann sowohl im Bereich der Vorratsleitung wie auch der von der Wiegekammer ausgehenden Steuerleitung der Fall sein. Durch die Ausbildung des Ventilkörpers als Stufenkolben ist sichergestellt, daß die von der Druckluft auf den Ventilkörper ausgeübte Öffnungskraft stets kleiner ist als eine von der Druckluft in Schließrichtung auf den Ventilkörper ausgeübte Schließkraft.

Der Ventilkörper des Absperrventils kann in Schließrichtung von der Kraft einer Schließfeder beaufschlagt sein und entgegen der Schließrichtung eine vom Vorratsdruck oder vom ausgesteuerten Druck beaufschlagte Teilwirkfläche aufweisen. Diese Teilwirkfläche gestattet es, im Defektfall das Absperrventil zu öffnen, um damit jederzeit die Versorgung der Vorratskammer mit Druckluft bzw. das Aussteuern von Steuerdruck über die von der Wiegekammer ausgehende Steuerleitung zu ermöglichen.

Der Wegsensor und/oder die ihm zugeordnete Kolben/Zylinder-Einheit können in einem separaten Teil des Gehäuses des Betriebsbremsventils geschützt angeordnet sein. Dies bedeutet, daß der Wegsensor jedenfalls nicht im Abluftstrom des kombinierten Einlaß/Auslaß-Ventils angeordnet ist, sondern in einer Gehäuseausbuchtung, so daß er einerseits geschützt untergebracht ist und andererseits eine Betätigungskammer für die Prüfstellung geschaffen ist.

Vorteilhaft ist es, wenn die Kolben/Zylinder-Einheit des Wegsensors unabhängig von dem Stößel betätigbar und der Kolben der Kolben/Zylinder-Einheit auf einer Rückführfeder abgestützt ist. Damit ist dann gleichzeitig das Spiel aus der Stößelverbindung zu dem Druckstück herausgenommen und es ist möglich, bei der Prüfbetätigung des Kolbens der Kolben/Zylinder-Einheit einen größeren Weg zurückzulegen, als es dem maximalen Weg des Stößels in maximaler Betriebsbremsstellung entspricht. Insoweit wird in der Prüfstellung der gesamte normale Hub des Wegsensors durchfahren. Durch die gesonderte Anordnung der Kolben/Zylinder-Einheit, die dem Wegsensor zugeordnet ist, vereinfacht sich die Ausbildung des Wiegekolbens, der für die Herbeiführung der Prüfstellung nur eine verhältnismäßig kleine Wirkfläche benötigt, die über das weitere Magnetventil beaufschlagbar ist.

In der Verbindungsleitung zu der Vorratskammer und/oder in der von der Wiegekammer ausgehenden Steuerleitung können ein Druckschalter oder Drucksensor angeordnet sein, um an diesen Stellen den Druck zu überprüfen, in ein elektrisches Signal umzuwandeln oder dem Fahrer anzuzeigen.

In konstruktiver Hinsicht und mit gewissen Funktionsunterschieden ergibt sich die Möglichkeit, entweder beide Magnetventile im Bereich der zu der Vorratskammer des kombinierten Einlaß/Auslaß-Ventils führenden Verbindungsleitung anzuordnen, oder aber das eine Magnetventil im Bereich der von der Wiegekammer ausgehenden Steuerleitung und das weitere Magnetventil im Bereich der zu der Vorratskammer des kombinierten Einlaß/Auslaß-Ventils führenden Verbindungsleitung anzuordnen.

Die Erfindung wird anhand bevorzugter Ausführungsbeispiele weiter erläutert und beschrieben. Es zeigen:
- Figur 1: einen Querschnitt durch eine erste Ausführungsform des Betriebsbremsventils,
- Figur 2: einen Querschnitt durch eine zweite Ausführungsform des Betriebsbremsventils, bei dem eine automatische Überprüfung der Funktionstüchtigkeit der wesentlichen Teile des Betriebsbremsventils möglich ist,
- Figur 3: ein Diagramm des ausgesteuerten Drucks über dem eingesteuerten Druck des Betriebsbremsventils gemäß Figur 2,
- Figur 4: eine weitere Ausführungsmöglichkeit des Betriebsbremsventils und
- Figur 5: eine weitere Ausführungsform des Betriebsbremsventils.

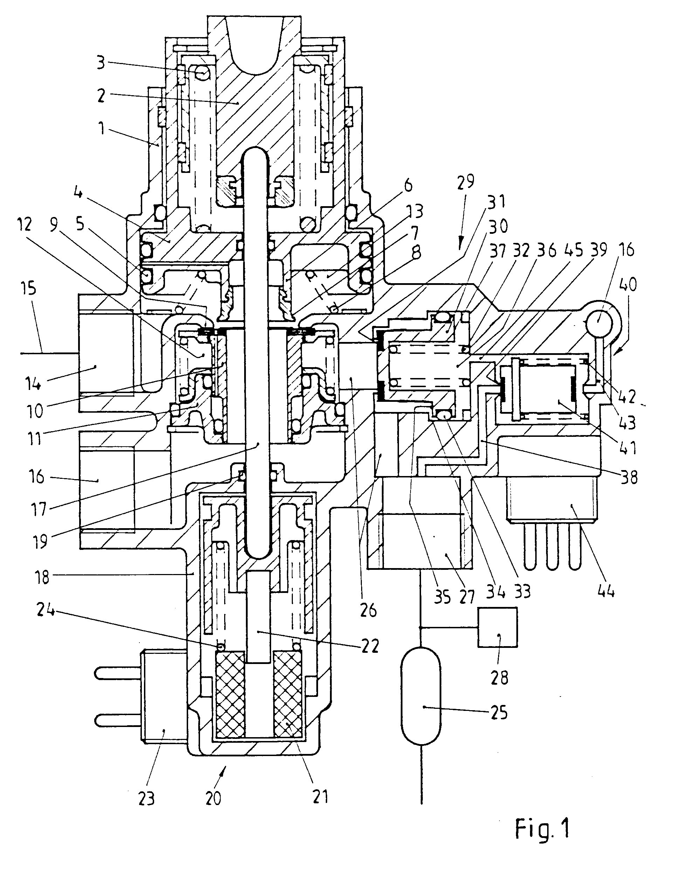

Das in Figur 1 dargestellte Betriebsbremsventil weist ein Gehäuse 1 auf, welches zweckmäßig auch mehrteilig ausgebildet sein kann. Es können auch mehrere Gehäuseteile vorgesehen sein, die einzelne Elemente jeweils aufnehmen und die über Leitungen entsprechend miteinander verbunden sind. Im Gehäuse 1 ist zunächst in bekannter Weise ein Druckstück 2, welches in der Regel von einem Fußpedal niedergedrückt wird, verschiebbar gelagert. Das Druckstück 2 stützt sich auf einer Regelfeder 3 ab, die andererseits einen Wiegekolben 4 belastet, der mindestens eine Dichtung 5 aufweist und im Bereich eines hohlen Fortsatzes 6 einen Auslaßventilsitz 7 trägt. Der Wiegekolben 4 ist gehäuseseitig auf einer schwachen Feder 8 abgestützt.

Etwa im Mittelbereich des Gehäuses 1 ist ein eingezogener Rand 9 gebildet, der mit einem federnd aufgehängten Doppelventilkörper 10 ein Einlaßventil 9, 10 bildet. Der Doppelventilkörper 10 bildet mit dem Auslaßventilsitz 7 ein Auslaßventil 7, 10 bildet. Über einen weiterhin im Gehäuse vorgesehenen Einsatz 11 wird somit eine Vorratskammer 12 für Druckluft gebildet. Unterhalb des Wiegekolbens 4 und oberhalb des Einlaßventils 9, 10 ist eine Wiegekammer 13 gebildet, von der beispielsweise über einen Anschluß 14 eine von der Wiegekammer 13 ausgehende Steuerleitung 15 angeschlossen ist, über die im entsprechenden Fall ein pneumatisches Steuersignal ausgesteuert wird, welches letztendlich entweder direkt oder über ein zwischengeschaltetes Relaisventil zu einer pneumatischen Beaufschlagung der Bremszylinder des betreffenden Bremskreises führt. Der Doppelventilkörper 10 ist zu Entlüftungszwecken hohl ausgebildet und steht mit einer Entlüftungsöffnung 16 in dauernder Verbindung.

Es ist ein Stößel 17 vorgesehen, der sich einerseits an dem Druckstück 2 abstützt und durch den Wiegekolben 4 sowie den Fortsatz 6 und den Doppelventilkörper 10 hindurchgeführt ist. Der Stößel 17 ragt in eine separate Gehäuseausbuchtung 18 hinein, wobei dort eine Dichtung 19 vorgesehen ist. In der Gehäuseausbuchtung 18 ist ein Wegsensor 20 untergebracht, dessen wesentliche Teile aus einem in einer Spule 21 verschiebbaren Kern 22 bestehen, so daß der Wegsensor 20 über einen Stecker 23 ein entsprechend dem Weg transformiertes elektrisches Signal abzugeben in der Lage ist. Der Stößel 17 ist über eine Rückführfeder 24 abgestützt, so daß der Betätigungsweg des Wegsensors 20 über den Stößel 17 spielfrei gehalten wird.

Von einem Druckluftvorratsbehälter 25, der an eine Druckluftbeschaffungsanlage angeschlossen ist, führt eine Verbindungsleitung 26 über einen Anschluß 27 letztlich bis zu der Vorratskammer 12 des Einlaßventils 9, 10. In dieser Verbindungsleitung ist zunächst ein Druckschalter 28 oder ein anderer Drucksensor angeordnet, um eine Anzeige bzw. ein Signal zu gewinnen, welches dem erreichten Druck in dem Druckluftvorratsbehälter 25 entspricht. Der Druckschalter 28 kann auch integriert im Gehäuse 1 des Betriebsbremsventils vorgesehen sein.

In der Verbindungsleitung 26 ist weiterhin ein Absperrventil 29 mit einem als Kolben 30 ausgebildeten Ventilkörper in der dargestellten Einbaurichtung vorgesehen. Der Kolben 30 bildet mit einem Rand 31 ein Schließventil 30, 31. Der Kolben ist in Schließrichtung auf einer Feder 32 gehäuseseitig abgestützt und besitzt eine Dichtung 33. Der Kolben 30 ist in einem Zylinder 34 dichtend verschiebbar gelagert, wobei zwischen dem Schließventil 30, 31 und der Dichtung 33 eine Teilwirkfläche 35 geschaffen ist, die als Kreisringfläche ausgebildet ist und dauernd vom Vorratsdruck in der Verbindungsleitung 26 beaufschlagt ist. Auf der anderen Seite, also auf der Seite der Feder 32, ist ein Wirkraum 36 und eine kreisförmige Wirkfläche 37 an dem Kolben 30 gebildet. Die Wirkfläche 37 ist größer als die Teilwirkfläche 35.

Von der Verbindungsleitung 26 bzw. dem Anschluß 27 führt eine Leitung 38 für Vorratsluft zu einem Einlaßsitz 39 eines Magnetventils 40, dessen Anker 41 von einer Feder 42 so belastet wird, daß das Einlaßventil 39, 41 des Magnetventils 40 geschlossen ist. Andererseits ist das Magnetventil 40 mit einer eigenen Entlüftung ausgestattet, d. h. eine Leitung 43 führt zu einer Entlüftungsöffnung 16. Es ist erkennbar, daß die beiden Entlüftungsöffnungen 16 ohne Weiteres auch als einzige Entlüftungsöffnung vorgesehen bzw. miteinander verbunden sein können. Das Magnetventil 40 ist über eine Stecker 44 elektrisch ansteuerbar. In der nicht-erregten Stellung, wie dargestellt, ist das Einlaßventil 39, 41 geschlossen und der Wirkraum 36 des Absperrventils 29 über eine Leitung 45 an die Atmospäre angeschlossen.

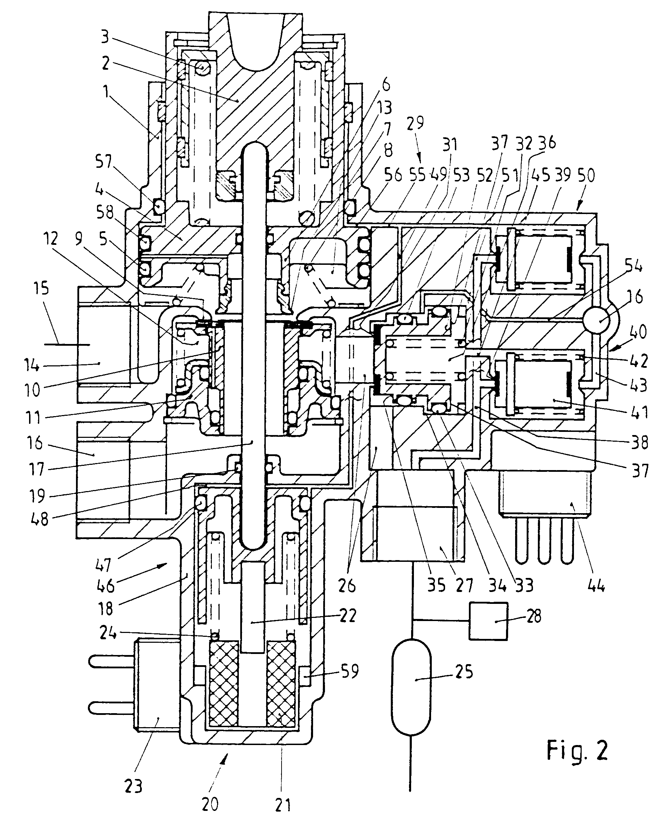

In druck- und stromlosem Zustand befinden sich die Teile des Betriebszylinders in der in Figur 1 dargestellten Relativlage. Nach dem Schließen der Zündung des Kraftfahrzeugs wird die Druckluftbeschaffungsanlage in Betrieb gesetzt und es baut sich allmählich der Vorratsdruck in dem Druckluftbehälter 25 auf. Dabei gelangt auch Druckluft auf die Teilwirkfläche 35 des Absperrventils 29, so daß das Schließventil 30, 31 geöffnet wird und Druckluft in die Vorratskammer 12 einströmt. Der Druckschalter 28 zeigt dabei das Erreichen des vorgesehenen Vorratsdrucks im Druckluftvorratsbehälter 25 an und gibt durch eine entsprechende Anzeige dem Fahrer bekannt, daß er nunmehr eine Überprüfung der Funktionstüchtigkeit der wesentlichen Teile des Betriebsbremsventils durchführen kann und soll. Beim nachfolgenden Niedertreten des Druckstücks 2 wird einerseits das Auslaßventil 7, 10 geschlossen und das Einlaßventil 9, 10 geöffnet, so daß ein entsprechender Druck in der Steuerleitung 15 ausgesteuert wird, der über ein Manometer oder einen anderen Drucksensor dem Fahrer angezeigt werden kann. Parallel dazu wird auch der Wegsensor 20 betätigt und es entsteht ein elektrisches Signal, welches dem zurückgelegten Weg proportional ist. Auch dieses Signal kann dem Fahrer angezeigt oder in sonstiger Weise registriert werden. Das Entstehen der beiden beschriebenen Signale zeigt dem Fahrer die Funktionstüchtigkeit des Einlaßventils 9, 10 und seiner Druckluftversorgung sowie die Funktionstüchtigkeit des Wegsensors 20 an. Um weiterhin die Funktionstüchtigkeit des Absperrventils 29 und des Magnetventils 40 zu überprüfen, wird das Magnetventil 40 entweder vom Fahrer oder von einer elektronischen Steuereinrichtung erregt, so daß sein Einlaß geöffnet und sein Auslaß geschlossen werden. Damit strömt Druckluft aus dem Druckluftvorratsbehälter 25 über die Leitung 38 in den Wirkraum 36 und auf die Wirkfläche 37 des Kolbens 30, so daß das Absperrventil 29 in seine Schließstellung überführt wird und die Vorratskammer 12 von einem weiteren Nachströmen von Druckluft aus dem Druckluftvorratsbehälter 25 abgeschlossen ist. Eine fortgesetzte Betätigung des Betriebsbremsventils durch weiteres Niederdrücken des Druckstücks wird sich dann in einem ansteigenden Signal des Wegsensors 20 und einem konstantbleibenden Druck in der Steuerleitung 15 äußern. Damit ist auch das Magnetventil 40 und das Absperrventil 29 überprüft und die Fahrt des Fahrzeugs kann beginnen. Da sich somit die wesentlichen Teile des Betriebsbremsventils als funktionstüchtig erwiesen haben, bleibt auch das Magnetventil 40 weiter erregt, so daß bei während der Fahrt erfolgenden Bremsbetätigungen kein Druck in der Steuerleitung 15 ausgesteuert wird. Es wird lediglich das von dem Wegsensor 20 gelieferte wegproportionale Signal ausgenutzt, um die Betriebsbremse des Kraftfahrzeugs anzusteuern. Sollte während der Fahrt ein Defekt im elektrischen Teil des Betriebsbremsventils oder der nachgeschalteten Steuerelektronik auftreten, so wird auch das Magnetventil 40 stromlos oder stromlos geschaltet, so daß der Wirkraum 36 dann wieder entlüftet wird. Durch den anstehenden Vorratsdruck verläßt der Kolben 30 des Absperrventils 29 seine Schließstellung und es wird Druckluft in die Vorratskammer 12 nachgespeist, so daß ein pneumatisches Ausgangssignal in der Steuerleitung 15 entsteht, über welches in diesem Notfall die Betriebsbremse angesteuert wird. Das in Figur 2 dargestellte Betriebsbremsventil stimmt in weiten Bereichen mit dem Betriebsbremsventil gemäß Figur 1 überein, weshalb diesbezüglich auf die vorangehende Beschreibung der konstruktiven Teile hingewiesen werden kann. Der Wegsensor 20 ist hier jedoch mit einer Kolben/Zylinder-Einheit 46 ausgestattet, wobei über eine Dichtung 47 ein Betätigungsraum 48 geschaffen ist, der über eine Leitung 49 zu einem Magnetventil 50 führt und von dort beaufschlagt werden kann. Das Magnetventil 50 ist so aufgebaut und ausgestattet, wie dies bereits anhand des Magnetventils 40 beschrieben wurde. Es ist über eine Leitung 51, die von der Leitung 38 abzweigt, an den Druckluftvorratsbehälter 25 angeschlossen. Das Magnetventil 50 besitzt auch eine eigene Entlüftung, die zu der gemeinsamen Entlüftungsöffnung 16 geführt ist.

Das Absperrventil 29 weist hier einen Stufenkolben 52 auf, wobei die vom Vorratsdruck beaufschlagte Teilwirkfläche 35 zwischen dem Rand 31 und einer Dichtung 53 gebildet wird. Der Zwischenraum zwischen den Dichtungen 33 und 53 ist über eine Leitung 54 entlüftet. Damit ist sichergestellt, daß die Summe aus der von dem Rand 31 eingeschlossenen Kreisfläche und der Teilwirkfläche 35 kleiner ist als die Wirkfläche 37.

Von dem Magnetventil 50 führt nicht nur die Leitung 49 zu dem Betätigungsraum 48 für die Prüfbetätigung des Wegsensors 20, sondern eine weitere Leitung 55 zu einer Wirkfläche 56 am Wiegekolben 4, die zwischen Dichtungen 57 und 58 gebildet ist.

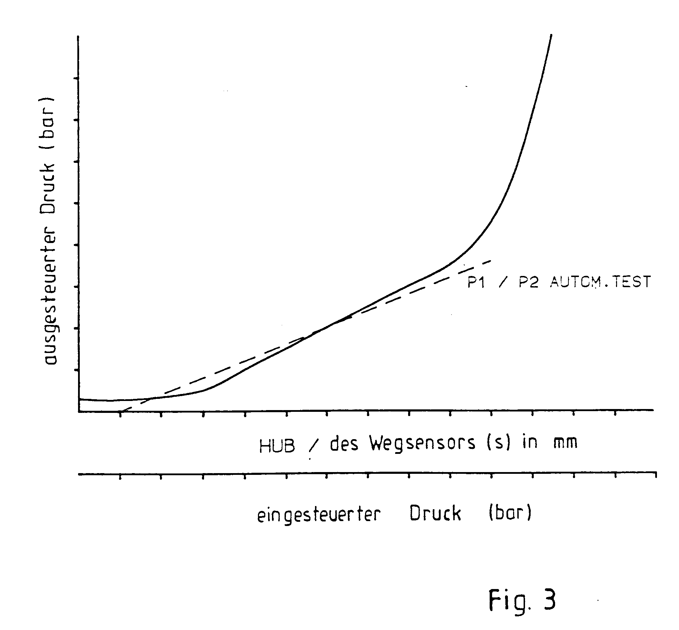

Figur 3 zeigt ein Diagramm des ausgesteuerten Drucks über den eingesteuerten Druck bzw. den Hub des Wegsensors 20 des Betriebsbremsventils gemäß Figur 2. Bei normaler Bremsbetätigung während der Fahrt ergibt sich eine Wirkung gemäß der durchgezogenen Kennlinie, während die Kennlinie des automatischen Tests gestrichelt wiedergegeben ist. Ein solcher automatischer Test kann wie folgt ablaufen:
Nach dem Schließen der Zündung befinden sich die Teile in der in Figur 2 dargestellten Stellung, d. h. die beiden Magnetventile 40 und 50 sind stromlos und geschlossen. Es wird nun der Druck im Druckluftvorratsbehälter 25 aufgefüllt. Der Druckschalter 28, der Stecker 23 des Wegsensors 20 und der Stecker 44 der beiden Magnetventile 40 und 50 sind mit einer nicht dargestellten elektronischen Steuereinrichtung verbunden. Der sich im Druckluftvorratsbehälter 25 aufbauende Druck gelangt auch auf die Teilwirkfläche 35 und führt zu einer Öffnung des Absperrventils 29, da der Stufenkolben 52 auf seiner Wirkfläche 37 entlüftet ist. Der Vorratsdruck steht somit auch in der Vorratskammer 12 vor dem geschlossenen Einlaßventil 9, 10 an. Sobald der Druckschalter 28 das Erreichen des vorgesehenen Vorratsdrucks der Steuereinrichtung anzeigt, wird das Magnetventil 50 erregt, während das Magnetventil 40 unerregt bleibt. Damit gelangt Vorratsluft einerseits auf die Wirkfläche 56 des Wiegekolbens 4 und andererseits auf die Kolben/Zylinder-Einheit 46 des Wegsensors 20. Der Wiegekolben 4 führt einen entsprechenden Hub aus, während das Druckstück 2 und der Stößel 17 stehenbleiben. Das Auslaßventil 7, 10 wird geschlossen und das Einlaßventil 9, 10 geöffnet, so daß in der Steuerleitung 15 ein durch die Bemessung der Wirkfläche 56 festgelegter Steuerdruck in Abhängigkeit von der Höhe des Vorratsdrucks ausgesteuert wird. Zwischen Wiegekolben 4 und Doppelventilkörper 10 ergibt sich die Abschlußstellung. Über einen an die Steuerleitung 15 angeschlossenen Druckschalter oder einen sonstigen Drucksensor, der ebenfalls mit der elektronischen Steuereinrichtung verbunden ist, wird die Höhe des ausgesteuerten Drucks festgestellt bzw. ein entsprechendes Signal abgegeben, welches das Erreichen oder Nicht-Erreichen des ordnungsgemäßen, ausgesteuerten Testdrucks repräsentiert.

Der Kolben der Kolben/Zylinder-Einheit 46 führt seinen vollen Hub aus, wobei die Rückführfeder 24 zusammengedrückt wird und der Kolben auf einem Anschlag 59 aufsetzt. Dieser Testhub ist größer festgelegt, als es dem Hub des Kolbens bei normaler maximaler Bremsbetätigung entspricht. Damit ist sichergestellt, daß der gesamte Funktionshub des Wegsensors 20 während des Testhubs überfahren wird und andererseits beim Aussteuern einer maximalen Bremsung während der Fahrt sich der Kolben der Kolben/Zylinder-Einheit 46 immer noch in einer Schwimmstellung befindet. Während des Testhubs wird das von dem Wegsensor 20 abgegebene Signal von der elektronischen Steuereinrichtung überprüft. Bewegen sich die Testsignale in den vorgegebenen Grenzen, dann bedeutet dies, daß die wesentlichen Teile des Betriebsbremsventils funktionstüchtig sind und somit kein Notfall vorliegt. Dabei erfolgt anschließend eine Umsteuerung der Magnetventile 40 und 50, d. h. es wird nunmehr das Magnetventil 40 erregt, während das Magnetventil 50 stromlos wird. Somit schließt das Magnetventil 40 seinen Auslaß und öffnet seinen Einlaß, so daß Druckluft aus dem Druckluftvorratsbehälter 25 auf die Wirkfläche 37 des Stufenkolbens 52 des Absperrventils 29 gelangt. Das Absperrventil 29 wird in seine Schließstellung vorgespannt, so daß die weitere Druckluftversorgung der Vorratskammer 12 abgesperrt ist. Das Magnetventil 50 hingegen bewegt sich in die Schließstellung, so daß die Wirkfläche 56 und der Betätigungsraum 48 entlüftet werden, so daß sowohl der Wiegekolben 4 wie auch der Kolben der Kolben/Zylinder-Einheit 46 ihre normale Ausgangsstellung, wie in Figur 2 dargestellt, wieder einnehmen können. Damit ist sichergestellt, daß sich während der anschließenden Fahrt nur elektrische Signale über den Wegsensor 20 ergeben, die dem jeweiligen Weg der Bremsbetätigung des Druckstücks 2 entsprechen. Das Magnetventil 40 steht während der Fahrt dauernd unter Strom, befindet sich also in seiner anderen, in Figur 2 nicht dargestellten Stellung. Sollte während der Fahrt sich ein Defekt im elektrischen Teil des Betriebsbremsventils und/oder der gesamten Bremsanlage einstellen, dann wird auch das Magnetventil 40 stromlos oder stromlos geschaltet, so daß das Absperrventil 29 die Nachlieferung von Druckluft in die Vorratskammer 12 nicht mehr behindert. Ab sofort wird dann wiederum ein pneumatisches Signal über die Steuerleitung 15 ausgesteuert, so daß in diesem Defektfall die weiteren Bremsungen durch ein pneumatisches Signal gesteuert werden.

Die gestrichelte Linie in Figur 3 verdeutlicht, daß für den Testfall eine konstante Übersetzung genutzt wird und es nicht erforderlich ist, den Wiegekolben 4 entsprechend einer maximalen Bremsung zu beaufschlagen bzw. zu steuern. Damit kann die Wirkfläche 56 relativ klein gestaltet werden, was für eine kleine Baugröße des Betriebsbremsventils sinnvoll ist. Trotzdem wird der maximale Hub des Wegsensors 20 durchlaufen.

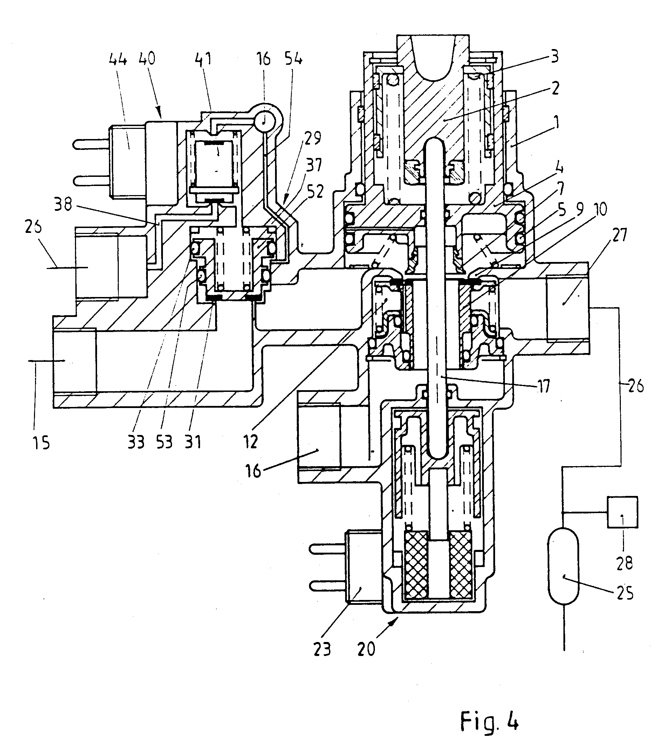

Figur 4 zeigt eine Ausführungsform des Betriebsbremsventils, die weitgehend der Ausführungsform gemäß Figur 1 entspricht, d. h. es ist nur ein Magnetventil 40 vorgesehen. Dieses Magnetventil 40 mit dem von ihm gesteuerten Absperrventil 29 ist jedoch im Gegensatz zu der Ausführungsform gemäß Figur 1 nicht in der Vorratsleitung, der Verbindungsleitung 26, sondern in der Steuerleitung 50 angeordnet, also aussteuerseitig. Damit wird zwar die Vorratskammer 12 ständig mit Druckluft versorgt und es erfolgt auch bei jeder Bremsbetätigung eine Aussteuerung und Auswiegung des Wiegekolbens 4. Die Weiterleitung dieses ausgesteuerten Drucks wird jedoch durch das geschlossene Absperrventil 29 verhindert, wenn die Teile des Betriebsbremsventils funktionstüchtig sind. Nur im Defektfall wird auch hier das Magnetventil 40 stromlos geschaltet, so daß der ausgesteuerte Druck über die Steuerleitung 15 ungehindert zu Bremsbetätigungszwecken genutzt werden kann. Die Funktion und das Erreichen der Prüfstellung stimmt weitgehend mit derjenigen des Ausführungsbeispiels gemäß Figur 1 überein, weshalb auf die dortigen Beschreibung sinngemäß verwiesen wird.

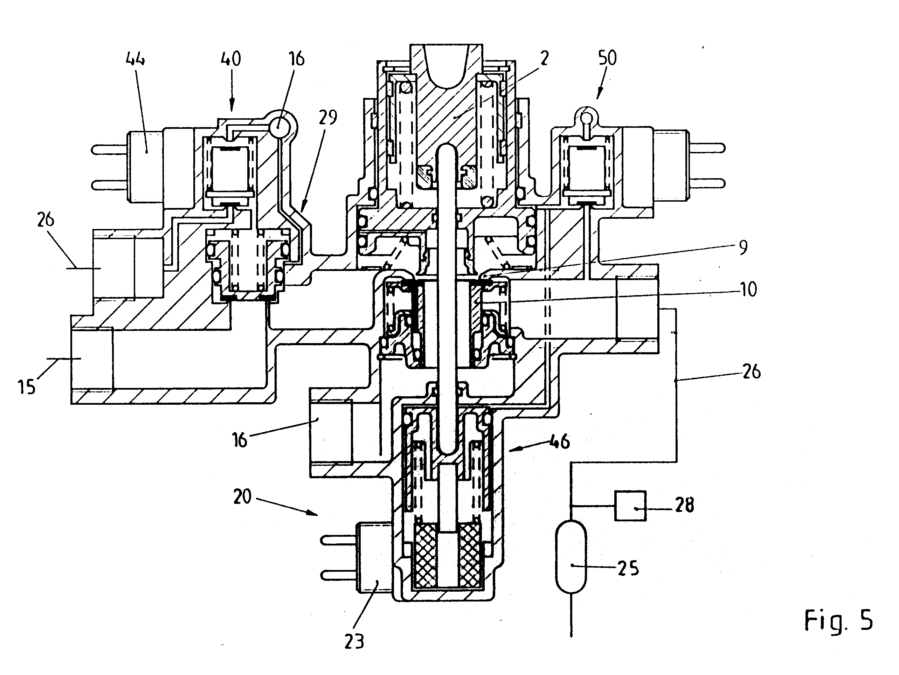

Figur 5 zeigt eine weitere Ausführungsform, die sich weitgehend an die Ausführungsform gemäß Figur 2 anlehnt. Das Magnetventil 50 ist hier ansteuerseitig vorgesehen, während das Magnetventil 40 mit dem zugehörigen Absperrventil 29 in die Steuerleitung 15 eingeschaltet sind. Die Anordnung und Einschaltung des Magnetventils 40 entspricht damit der Ausführungsform gemäß Figur 4. Auch mit der Ausführungsform des Betriebsbremsventils gemäß Figur 5 ist eine automatische Überprüfung möglich, die sich sinngemäß aus der Beschreibung des Betriebsbremsventils gemäß Figur 2 ergibt. Es versteht sich, daß die Magnetventile 40 und 50 auch in einem zu dem Gehäuse 1 separaten Gehäuse untergebracht sein können, wobei lediglich dann entsprechende Verbindungsleitungen zu dem Gehäuse 1 vorgesehen sein müssen. Auch der Druckschalter 28 kann selbstverständlich an entsprechender Stelle im Gehäuse 1 vorgesehen sein.

### Bezugszeichenliste:

- 1 =: Gehäuse
- 2 =: Druckstück
- 3 =: Regelfeder
- 4 =: Wiegekolben
- 5 =: Dichtung
- 6 =: Fortsatz
- 7 =: Auslaßventilsitz
- 8 =: Feder
- 9 =: Rand
- 10 =: Doppelventilkörper
- 11 =: Einsatz
- 12 =: Vorratskammer
- 13 =: Wiegekammer
- 14 =: Anschluß
- 15 =: Steuerleitung
- 16 =: Entlüftungsöffnung
- 17 =: Stößel
- 18 =: Gehäuseausbuchtung
- 19 =: Dichtung
- 20 =: Wegsensor
- 21 =: Spule
- 22 =: Kern
- 23 =: Stecker
- 24 =: Rückführfeder
- 25 =: Druckluftvorratsbehälter
- 26 =: Verbindungsleitung
- 27 =: Anschluß
- 28 =: Druckschalter
- 29 =: Absperrventil
- 30 =: Kolben
- 31 =: Rand
- 32 =: Feder
- 33 =: Dichtung
- 34 =: Zylinder
- 35 =: Teilwirkfläche
- 36 =: Wirkraum
- 37 =: Wirkfläche
- 38 =: Leitung
- 39 =: EInlaßsitz
- 40 =: Magnetventil
- 41 =: Anker
- 42 =: Feder
- 43 =: Leitung
- 44 =: Stecker
- 45 =: Leitung
- 46 =: Kolben/Zylinder-Einheit
- 47 =: Dichtung
- 48 =: Betätigungsraum
- 49 =: Leitung
- 50 =: Magmentventil
- 51 =: Leitung
- 52 =: Stufenkolben
- 53 =: Dichtung
- 54 =: Leitung
- 55 =: Leitung
- 56 =: Wirkfläche
- 57 =: Dichtung
- 58 =: Dichtung
- 59 =: Anschlag

## Patentansprüche

1. Betriebsbremsventil für eine elektrisch oder pneumatisch betätigbare Bremsanlage eines Kraftfahrzeugs, mit einem in einem Gehäuse (1) angeordneten verschiebbaren Druckstück (2) und einem über eine Stufungsfeder (3) betätigbaren Wiegekolben (4), von dessen Wiegekammer (13) eine Steuerleitung (15) ausgeht und dem ein mit einer Vorratskammer (12) ausgestattetes und über eine Verbindungsleitung (26) an einen Druckluftvorratsbehälter (25) anschließbares kombiniertes Einlaß/Auslaß-Ventil (7, 9, 10) nachgeschaltet ist, und einem Wegsensor (20), der über einen mit dem Druckstück verbundenen Stößel (17) betätigbar ist, dadurch gekennzeichnet, daß in der Verbindungsleitung (26) zu der Vorratskammer (12) des Einlaß/Auslaß-Ventils (7, 9, 10) oder in der von der Wiegekammer (13) ausgehenden Steuerleitung (15) ein Absperrventil (29) angeordnet ist, zu dessen Betätigung ein elektrisch ansteuerbares Magnetventil (40) vorgesehen ist, das in nicht-erregtem Zustand den Ventilkörper des Absperrventils (29) entgegen seiner Schließrichtung entlastet.

2. Betriebsbremsventil nach Anspruch 1, dadurch gekennzeichnet, daß ein weiteres, elektrisch ansteuerbares Magnetventil (50) vorgesehen ist, und daß der Wiegekolben (4) ansteuerseitig eine Wirkfläche (56) und der Wegsensor (20) in Betätigungsrichtung durch den Stößel (17) eine Kolben/Zylinder-Einheit (46) aufweisen, die beide über das weitere Magnetventil (50) beaufschlagbar sind.

3. Betriebsbremsventil nach Anspruch 1 oder 2, dadurch gekennzeichnet, daß das Magnetventil (40) oder die Magnetventile (40, 50) einen Vorratsanschluß und einen Entlüftungsanschluß aufweisen.

4. Betriebsbremsventil nach einem oder mehreren der Ansprüche 1 bis 3, dadurch gekennzeichnet, daß das Absperrventil (29) als Ventilkörper einen Stufenkolben (52) aufweist, der mit einem eingezogenen Rand (31) zusammenwirkt und mit seiner Schließrichtung in Durchflußrichtung der Druckluft eingebaut ist.

5. Betriebsbremsventil nach einem oder mehreren der Ansprüche 1 bis 4, dadurch gekennzeichnet, daß der Ventilkörper des Absperrventils (29) in Schließrichtung von der Kraft einer Schließfeder (32) beaufschlagt ist und entgegen der Schließrichtung eine vom Vorratsdruck oder vom ausgesteuerten Druck beaufschlagbare Teilwirkfläche (35) aufweist.

6. Betriebsbremsventil nach Anspruch 1 oder 2, dadurch gekennzeichnet, daß der Wegsensor (20) und/oder die ihm zugeordnete Kolben/Zylinder-Einheit (46) in einem separaten Teil (18) des Gehäuses (1) des Betriebsbremsventils geschützt angeordnet ist.

7. Betriebsbremsventil nach Anspruch 6, dadurch gekennzeichnet, daß die Kolben/Zylinder-Einheit (46) des Wegsensors (20) unabhängig von dem Stößel (17) betätigbar und der Kolben der Kolben/Zylinder-Einheit (46) auf einer Rückführfeder (24) abgestützt ist.

8. Betriebsbremsventil nach Anspruch 1, dadurch gekennzeichnet, daß in der Verbindungsleitung (26) zu der Vorratskammer (12) und/oder in der von der Wiegekammer (13) ausgehenden Steuerleitung (15) ein Druckschalter (28) oder Drucksensor angeordnet sind.

9. Betriebsbremsventil nach Anspruch 2, dadurch gekennzeichnet, daß beide Magnetventile (40, 50) im Bereich der zu der Vorratskammer (12) des kombinierten Einlaß/Auslaß-Ventils führenden Verbindungsleitung (26) angeordnet sind.

10. Betriebsbremsventil nach Anspruch 2, dadurch gekennzeichnet, daß das weitere Magnetventil (50) im Bereich der zu der Vorratskammer (12) des kombinierten Einlaß/Auslaß-Ventils führenden Verbindungsleitung (26) und das erste, dem Absperrventil (29) zugeordnete Magnetventil (40) im Bereich der von der Wiegekammer (13) ausgehenden Steuerleitung (15) angeordnet sind.

## Claims

1. Brake control valve for electrically or pneumatically operated brake system for a vehicle, having a movable thrust piece (2) arranged within a housing (1) and a balance piston (4), which can be actuated via a regulating spring (3) and the balance chamber (13) of which is connected to a control line (15), whereby a combined inlet/outlet valve (7, 9, 10), equipped with a reservoir chamber (12) and which can be linked via a connecting line (26) to a compressed air supply (25), is connected downstream of said piston, and having a position sensor (20), which can be actuated via a push rod (17) connected to the thrust piece, **wherein** a stop valve (29) is located in the connection line (26) to the reservoir chamber (12) for the inlet/outlet valve (7, 9, 10) or in the control line (15) coming from the balance chamber (13), and an electrically actuated solenoid valve (40) is provided for the actuation of said stop valve, whereby the solenoid valve in the non-exited state relieves the valve body of the stop valve (29) opposite to its closing direction.

2. The brake control valve of claim 1, **wherein** a further electrically controllable solenopid valve (50) is provided and the balance piston (4) has an effective area (56) on the controlling side and the position sensor (20) has a piston/cylinder unit (46) in the actuation direction of the push rod (17), whereby both can be acted upon by the further solenoid valve (50).

3. The brake control valve of claim 1 or 2, **wherein** the solenoid valve (40) or the solenoid valves (40, 50) has/have a supply connection and a vent connection.

4. The brake control valve of claim 1 or 2, **wherein** the stop valve (29) has a stepped piston (52) as a valve body which works together with an inwardly protruding edge (31) and is mounted with its closing direction tn the throughflow direction of the compressed air.

5. The brake control valve of one or several of the claims 1 to 4, **wherein** the valve body of the stop valve (29) is acted upon in the closing direction by the force of a closing spring (32) and has an effective area subsection (35) acted upon by the supply pressure or by the controlled pressure in the opposite direction to the closing direction.

6. The brake control valve of claim 1 or 2, **wherein** the position sensor (20) and/or the piston/cylinder unit (46) assigned to it is/are safely located in a separate section (18) of the housing (1) for the brake control valve.

7. The brake control valve of claim 6, **wherein** the piston/cylinder unit (46) of the position sensor (20) can be actuated independently of the push rod (17) and the piston of the piston/cylinder unit (46) is supported on a return spring (24).

8. The brake control valve of claim 1, **wherein** a pressure switch (28) or pressure sensor is located in the connecting line (26) to the reservoir chamber (12) and/or in the control line (15) starting from the balance chamber (13).

9. The brake control valve of claim 2, **wherein** both solenoid valves (40, 50) are located in the region of the connecting line (26) leading to the reservoir chamber (12) of the combined inlet/outlet valve.

10. The brake control valve of claim 2, **wherein** the further solenoid valve (50) is located in the region of the connecting line (26) leading to the reservoir chamber (12) of the combined inlet/outlet valve and the first solenoid valve (40) assigned to the stop valve (29) is located in the region of the control line (15) coming from the balance chamber (13).

## Revendications

1. Soupape de frein de service pour un système de freinage actionnable électriquement ou pneumatiquement d'un véhicule automobile, comportant une pièce de pression (2) coulissante, placée dans un boîtier (1) et un piston de pesée (4) actionnable au moyen d'un ressort de graduation (3), de la chambre de pesée (13) duquel part une conduite de commande (15) et en aval duquel est montée une soupape d'admission/d'échappement (7, 9, 10) combinée, équipée d'une chambre de réserve (12) et raccordable, par une conduite de liaison (26), à un réservoir d'air comprimé (25), et comportant un capteur de déplacement (20) qui est actionnable par un poussoir (17), relié à la pièce de pression, caractérisée en ce que dans la conduite de liaison (26) menant à la chambre de réserve (12) de la soupape d'admission/échappement (7, 9, 10) ou dans la conduite de commande (15), partant de la chambre de pesée (13), est placée une soupape d'arrêt (29) pour l'actionnement de laquelle est prévue une soupape magnétique (40) commandable électriquement, qui à l'état non excité décharge le corps de soupape de la soupape d'arrêt (29), dans le sens contraire à son sens de fermeture.

2. Soupape de frein de service selon la revendication 1, caractérisée en ce qu'il est prévu une autre soupape magnétique (50) commandable électriquement, et en ce que le piston de pesée (4) présente côté commande une surface active (56) et le capteur de déplacement (20) présente dans le sens d'actionnement par le poussoir (17), une unité à cylindre et piston (46), qui toutes deux peuvent être sollicitées par l'autre soupape magnétique (50).

3. Soupape de frein de service selon les revendications 1 ou 2, caractérisée en ce que la soupape magnétique (40) ou les soupapes magnétiques (40, 50) présentent un raccord de réserve et un raccord de purge d'air.

4. Soupape de frein de service selon une ou plusieurs des revendications 1 à 3, caractérisée en ce que la soupape d'arrêt (29) présente en tant que corps de soupape un piston étagé (52), qui coopère avec un bord (31) en retrait et est monté avec son sens de fermeture dans le sens de passage de l'air comprimé.

5. Soupape de frein de service selon une ou plusieurs des revendications 1 à 4, caractérisée en ce que le corps de soupape de la soupape d'arrêt (29) est sollicité dans le sens de la fermeture par la force d'un ressort de fermeture (32) et dans le sens contraire au sens de fermeture, présente une surface active partielle (35) pouvant être sollicitée par la pression de réserve ou par la pression de commande de sortie.

6. Soupape de frein de service selon les revendications 1 ou 2, caractérisée en ce que le capteur de déplacement (20) et/ou l'unité à cylindre et piston (46) qui est lui associée, est placé protégé dans un élément séparé (18) du boîtier (1) de la soupape de frein de service.

7. Soupape de frein de service selon la revendication 6, caractérisée en ce que l'unité à cylindre et piston (46) du capteur de déplacement (20) est actionnable indépendamment du poussoir (17) et le piston de l'unité à cylindre et piston (46) prend appui sur un ressort de rappel (24).

8. Soupape de frein de service selon la revendication 1, caractérisée en ce que dans la conduite de liaison (26) menant à la chambre de réserve (12) et/ou dans la conduite de commande (15) partant de la chambre de pesée (13) sont placés un interrupteur à pression (28) ou un capteur de pression.

9. Soupape de frein de service selon la revendication 2, caractérisée en ce que les deux soupapes magnétiques (40, 50) sont placées dans la région de la conduite de liaison (26) menant à la chambre de réserve (12) de la soupape d'admission/échappement combinée.

10. Soupape de frein de service selon la revendication 2, caractérisée en ce que l'autre soupape magnétique (50) est placée dans la région de la conduite de liaison (26) menant à la chambre de réserve (12) de la soupape d'admission/échappement combinée et la première soupape magnétique (40), associée à la soupape d'arrêt (29), est placée dans la région de la conduite de commande (15) partant de la chambre de pesée (13).
